# EUROPÄISCHE PATENTSCHRIFT

(11) **EP 1 751 005 B1**
(45) Veröffentlichungstag und Bekanntmachung des Hinweises auf die Patenterteilung: **26.03.2008**
(21) Anmeldenummer: 05742286.7
(22) Anmeldetag: 26.05.2005
(51) Int. Cl.: B65B 25/14, B65B 51/30, B65B 51/16, B29C 65/02

(54) **VERFAHREN UND VORRICHTUNG ZUM VERPACKEN VON FLACHEN OBJEKTEN**
METHOD AND DEVICE FOR PACKAGING FLAT ARTICLES
PROCEDE ET DISPOSITIF D'EMBALLAGE D'OBJETS PLATS

(30) Priorität: 02.06.2004 CH 9322004
(43) Veröffentlichungstag der Anmeldung: 14.02.2007
(73) Patentinhaber: Ferag AG, 8340 Hinwil (CH)
(72) Erfinder: HONEGGER, Werner, CH-8806 Bäch (CH)
(74) Vertreter: Frei Patent Attorneys
(86) Internationale Anmeldenummer: PCT/CH2005/000297
(87) Internationale Veröffentlichungsnummer: WO 2005/118402

(56) Entgegenhaltungen:
- EP-A- 0 712 782
- DE-A- 19 509 232
- GB-A- 716 783
- GB-A- 1 054 644
- US-A- 4 048 003

## Beschreibung

Die Erfindung liegt auf dem Gebiete der Verpackungstechnik und betrifft ein Verfahren und eine Vorrichtung zum Verpacken von flachen Objekten nach dem Oberbegriff der entsprechenden unabhängigen Patentansprüche. Die erfindungsgemässe Vorrichtung dient zum Verpacken von flachen Objekten, beispielsweise von einzelnen Druckprodukten, von stapelförmigen Gruppen von Druckprodukten oder von stapelförmigen Gruppen von Druckprodukten und anderen flachen Gegenständen wie beispielsweise CDs, flachen Mustergegenständen oder flachen Musterbeuteln.

Es ist bekannt, flache Objekte der oben genannten Art mit Hilfe einer quasi endlosen Verpackungsmaterial-Bahn (z.B. ab Rolle zugeführte Kunststoffolie oder Papierbahn) zu verpacken. Dabei wird eine solche Verpackungsmaterial-Bahn um die in einer Reihe hintereinander und voneinander beabstandet geförderten Objekte gelegt oder es wird einer solchen Reihe beidseitig eine Verpackungsmaterial-Bahn zugeführt. Dann wird die Verpackungsmaterial-Bahn in Längsrichtung auf der Oberseite der Reihe oder seitlich davon in Längsnähten und zwischen je zwei aufeinanderfolgenden Objekten quer zur Längsrichtung in Quernähten verschlossen. Gegebenenfalls werden die derart allseitig vom Verpackungsmaterial umschlossenen Objekte unmittelbar nach der Erstellung der Quernähte oder gleichzeitig damit auch voneinander getrennt.

Bei Verwendung von Kunststoffolie als Verpackungsmaterial werden die Längs- und Quernähte üblicherweise durch Schweissen hergestellt, wobei das Trennen der verpackten Objekte gleichzeitig mit der Erstellung der Quernähte durchgeführt werden kann. Bei der Verwendung von Papier als Verpackungsmaterial kann beispielsweise unmittelbar vor der Zuführung der Verpackungsmaterial-Bahn zur Reihe der zu verpackenden Objekte an den Stellen der Längs- und Quernähte ein durch Wärme aktivierbarer Kleber auf das Verpackungsmaterial aufgebracht werden, so dass die Nähte dann mit ähnlichen Mitteln erstellt werden können wie die geschweissten Nähte an Kunststoffverpackungen. Es ist auch möglich, die Nähte durch eine Prägung oder durch andere bekannte und auf das verwendete Verpackungsmaterial abgestimmte Methoden zu schliessen.

Für solche Bearbeitungsoperationen wie Schweissen, Kleben etc.... werden Druckprodukte in Förderströmen in eine Bearbeitungsstation gefördert und aus dieser wieder weggefördert. Die Bearbeitungsstation ist vorteilhafterweise derart ausgerüstet, dass die Förderung der verpackten Objekte für die Bearbeitung nicht unterbrochen werden muss sondern kontinuierlich betrieben werden kann. Dies bedeutet, dass Bearbeitungswerkzeuge, die über eine vorgegebene Zeit auf die zu verpackenden Druckprodukte zu wirken haben, während dieser Zeit mit dem zu bearbeitenden Förderstrom mitgefördert werden müssen, derart, dass sie gegenüber dem Druckprodukt mindestens in Förderrichtung keine Relativgeschwindigkeit haben. Gleichzeitig müssen sich die zu verbindenden Materialschichten vor und während der Bearbeitung respektive Verbindung in einer definierten Lage zueinander befinden, damit eine fehlerfreie Verbindung oder Naht erzielt werden kann.

In der EP 0712 782 A1 sind ein Verfahren und eine Vorrichtung gemäß den Oberbegriffen der Ansprüche 1 und 11 offenbart, wobei eine Bearbeitungseinrichtung intermittierend bewegt. Die Bearbeitungseinrichtung besteht aus einer Schweiss- und Trenneinrichtung mit einem Schweissbalken und einem Gegenbalken in Querrichtung eines Förderstroms, sowie Umlenkrollen, welche ein Förderband um die Umlenkrollen führen. In einer ersten Phase der Bewegung, beginnend in einer Startposition, weist die Bearbeitungseinrichtung dieselbe Geschwindigkeit und Bewegungsrichtung wie der Förderstrom auf, und findet die Bearbeitung durch Verschweissen und Trennen eines Verpackungsbandes statt. In einer zweiten Phase bewegt sich die Bearbeitungseinrichtung gegen den Förderstrom zur Startposition zurück und ist geöffnet, so dass der Förderstrom nicht tangiert wird. Die intermittierende Bewegung bedingt einen entsprechenden Steueraufwand, einen Energieaufwand und eine Materialbeanspruchung entsprechend der ständigen Wechselbelastung der bewegten Teile. Durch die intermittierende Bewegung ist insbesondere die Taktgeschwindigkeit der Einrichtung begrenzt. Falls die zu verpackenden Objekte relativ dick sind, liegt bei höheren Bandspannungen ein entsprechend grosser Spalt zwischen der oberen und der unteren Verpackungsschicht vor, und z.B. eine Verschweissung kann nicht zuverlässig ausgeführt werden. Ist die Bandspannung geringer, so liegt das Verpackungsmaterial gegebenenfalls lose zwischen den Objekten, und es ist insbesondere bei hohen Geschwindigkeiten seine Anordnung nicht kontrollierbar, was ebenfalls zu schlechten Verbindungen führen kann.

In der DE 26 51 131 A1 ist eine Verpackungseinrichtung offenbart, bei welcher zwei an jeweils einer Welle befestigte Schweissbacken in Querrichtung beidseits einer Förderstrecke angeordnet sind. In Ruhestellung sind die Schweissbacken nicht zur Förderstrecke hin gerichtet. Zur Verschweissung werden die Schweissbacken gegeneinander gedreht, drücken von beiden Seiten gegen einen Verpackungsschlauch, und drehen sich weiter voneinander weg. Dies geschieht jeweils intermittierend und ruckartig, synchronisiert mit der Lage von verpackten Gegenständen. Auch hier treten im Prinzip dieselben Beanspruchungen und Limitierungen durch die intermittierende Bewegung auf. Auch das Problem der unklaren Lage des Verpackungsmaterials bleibt dasselbe.

Um eine gleichförmige, d.h. nicht intermittierende Bewegung von Bearbeitungswerkzeugen zu erreichen, wird in der WO 2004 018 297 eine drehende Bearbeitungstrommel vorgeschlagen. Diese Trommel wird vom Förderstrom umlaufen und dabei von einem Anpressband umschlungen, welches den Förderstrom gegen die Werkzeuge presst, um beispielsweise eine Verschweissung zu ermöglichen. Dadurch ist die Lage des Verpackungsmaterials zwar definiert, aber aufgrund der Umschlingung der Trommel durch den Förderstrom ergibt sich eine Verkomplizierung der Einrichtung: Der Förderstrom muss nach der Umlenkung um die Bearbeitungstrommel in der Regel wieder in die ursprüngliche Richtung umgelenkt werden. Dazu sind zusätzliche Bänder, Rollen und Antriebe notwendig, und der Platzbedarf für die gesamte Einrichtung vergrössert sich.

Es ist deshalb Aufgabe der Erfindung, ein Verfahren und eine Vorrichtung zum Verpacken von flachen Objekten der eingangs genannten Art zu schaffen, welche die oben genannten Nachteile beheben.

Diese Aufgabe lösen ein Verfahren und eine Vorrichtung zum Verpacken von flachen Objekten mit den Merkmalen der entsprechenden unabhängigen Patentansprüche.

Es weisen also Bearbeitungsmittel, wie zum Beispiel Schweissbalken oder Anpressbügel, die mit einem Förderstrom mitbewegt werden, jeweils mindestens ein einfederndes Niederhaltemittel auf, welches die zu bearbeitenden Verpackungsmittel in eine definierte Lage zueinander bringt. Dabei drückt das Niederhaltemittel durch Ausüben einer Kraft eine obere Bahn des Verpackungsmaterials gegen eine untere Bahn und bewegt diese gegeneinander respektive drückt sie zusammen, bevor das Bearbeitungsmittel mit dem Verpackungsmittel in Berührung kommt und eine Bearbeitungsoperation wie Verschweissen oder Andrücken ausführt.

Dank den Niederhaltemitteln kann das Bearbeitungsmittel an einen linear und mit hoher Geschwindigkeit bewegten Förderstrom herangeführt werden, wobei die Verpackungsbahnen in eine definierte Lage gebracht werden und eine saubere Verbindung ermöglicht wird.

In einer bevorzugten Ausführungsform der Erfindung weist das Bearbeitungsmittel sowohl ein erstes Niederhaltemittel als auch ein zweites Niederhaltemittel auf, welche in Bewegungsrichtung jeweils vor beziehungsweise nach dem Bearbeitungsmittel angeordnet sind und federnd mit dem Bearbeitungsmittel verbunden sind. Dadurch wird die Lage der Verpackungsbahnen noch besser definiert. Ferner dient ein dem Bearbeitungsmittel nachlaufendes Niederhaltemittel zum Fixieren eines nachfolgenden Teiles des Förderstromes und verhindert, dass dieses am Bearbeitungsmittel, beispielsweise einem Schweissbalken, hängen bleibt. Weiter unterstützt das nachlaufende Niederhaltemittel die Förderung des Förderstromes.

In einer weiteren bevorzugten Ausführungsform der Erfindung wird der Förderstrom im Bereich der Bearbeitung durch ein Trägerband gefördert, welches eine Gegenkraft zu den von den Niederhaltemitteln und dem Bearbeitungsmittel auf den Förderstrom ausgeübten Kräften ausübt. Dabei bewegen sich das Bearbeitungsmittel und das Trägerband mit im wesentlichen derselben Geschwindigkeit in dieselbe Richtung. Das Trägerband ist vorzugsweise im Bearbeitungsbereich nicht unterstützt, wird also nur ausserhalb des Bearbeitungsbereiches über Rollen geführt. Dadurch weist das Trägerband eine gewisse Nachgiebigkeit senkrecht zur Bandfläche auf, und wird durch die Niederhaltemittel und Bearbeitungsmittel leicht ausgelenkt, wodurch Positionsungenauigkeiten ausgeglichen werden. Das Trägerband verläuft jedoch bis auf diese Nachgiebigkeit im Bearbeitungsbereich im wesentlichen gerade. Es ist vorzugsweise jeweils nur ein Bearbeitungsmittel in Berührung mit dem Förderstrom, und es ist keine Umschlingung von mehreren trommelartig angeordneten Bearbeitungsmitteln mit einer entsprechenden Änderung der Bewegungsrichtung des Förderstromes nötig. Stattdessen verläuft das Trägerband im wesentlichen tangential zu einer Umlaufbahn der Bearbeitungsmittel.

Es werden also keine starren, harten - seien es bewegliche oder stationäre - Gegenbalken verwendet, und die Förderbänder müssen nicht zur Aufnahme eines solchen Gegenbalkens unterbrochen werden. Relativ schwere Teile wie die Schweissbalken werden nur von einer Seite an den Förderstrom heranbewegt, während an der anderen Seite das Trägerband verläuft.

Alternativ oder zusätzlich zur Nachgiebigkeit des Trägerbandes können Ungenauigkeiten auch durch eine federnde respektive nachgiebige Aufhängung der Bearbeitungsmittel erreicht werden. Die Richtung der Nachgiebigkeit liegt im Wesentlichen senkrecht zur Bewegungsrichtung des Bearbeitungsmittels.

Vorzugsweise weist das Trägerband eine nachgiebige oder komprimierbare Dämpfungsschicht auf. Diese wird durch die Einwirkung insbesondere des Bearbeitungsmittels komprimiert. Dadurch wird eine Kontaktfläche und eine Kontaktdauer für eine Schweissung oder ein Anpressen vergrössert, und es werden ferner - im Gegensatz zu einem ungedämpften Band - hochfrequente Störgeräusche vermieden.

Für Schweissanwendungen weist das Trägerband vorzugsweise eine Aussenbeschichtung aus hitzebeständigem Material, beispielsweise Teflon auf. Dadurch wird einerseits der Kern des Bandes geschützt, und andererseits wird eine Ablösung von frisch verschweissten Materialstellen vom Band erleichtert. Andernfalls besteht die Gefahr, dass Objekte am Verpackungsmaterial am Band hängen bleiben und dadurch die Produktion unterbrochen wird.

In einer weiteren bevorzugten Variante der Erfindung werden mehrere Bearbeitungsmittel jeweils in einer gleichförmigen, also nicht intermittierenden Bewegung vorzugsweise gemeinsam angetrieben und bewegt. Die mehreren Bearbeitungsmittel werden in vorzugsweise gleichmässigen Abständen hintereinander
- an einer Ausgangsstellung vorbei mit im wesentlichen der Geschwindigkeit des Förderstroms an den Förderstrom herangeführt,
- entlang des Förderstromes geführt, wobei die Bearbeitungsoperation ausgeführt wird, und
- anschliessend auf einer Rückführstrecke an der Ausgangsstellung vorbei zurückgeführt.
Die Bearbeitungsmittel sind also an einem Bewegungsmittel zur kontinuierlichen Bewegung entlang einer Umlaufbahn ausgebildet, welche Umlaufbahn die Bearbeitungsmittel im Bearbeitungsbereich in Kontakt mit dem Förderstrom bringt. Durch die gleichförmige Bewegung werden eine Beanspruchung und ein Energieverlust unregelmässiger Bewegungen vermieden, und sind somit hohe Taktraten möglich.

Beispielsweise können eine Vielzahl von Bearbeitungsmitteln auf einer im wesentlichen ovalen Umlaufbahn durch z.B. eine kettenartige Aufhängung als Bewegungsmittel befördert werden. Die Umlaufbahn weist dabei einen geradlinigen Abschnitt auf, zu welchem die Bearbeitungsmittel mit im wesentlichen der Geschwindigkeit des Förderstroms herangeführt werden, wobei die Niederhaltemittel am Förderstrom angreifen. Entlang des geradlinigen Abschnittes werden die Bearbeitungsmittel mit dem Förderstrom parallel geführt und wird die Bearbeitungsoperation ausgeführt. Der Bereich der Parallelführung bildet also einen Bearbeitungsbereich. Anschliessend werden die Bearbeitungsmittel auf einer Rückführstrecke zurückgeführt.

In einer weiteren bevorzugten Ausführungsform der Erfindung sind die Bearbeitungsmittel an einer Trommel montiert und in einer Kreisbahn bewegbar, wobei eine Förderrichtung des Förderstromes im wesentlichen tangential zu einer Kreisbahn entsprechend den Endpunkten der Bearbeitungsmittel verläuft.

Dieser Ausführungsform der Erfindung liegt die überraschende Erkenntnis zugrunde, dass für bestimmte Bearbeitungsvorgänge wie beispielsweise Verschweissen eine vergleichsweise kurze Bearbeitungszeit ausreichend ist und somit trotz des tangentialen Verlaufes des Förderstromes extrem hohe Stückzahlen möglich sind.

Mehrere solcher Trommeln können auf einer gemeinsamen Welle montiert sein und auf diese Weise mehrere parallel nebeneinander verlaufende Förderströme bearbeitet werden. Die Bearbeitungsmittel auf den parallelen Teiltrommeln sind dabei gleichphasig oder aber versetzt zueinander angeordnet.

Die Bearbeitungsmittel sind in bekannter Weise zum Beispiel als Schweissbalken zum Verschweissen thermoplastischer Verpackungsmaterialien, oder zum kombinierten Schweissen und Trennen ausgebildet. In anderen Ausführungsformen der Erfindung ist ein Bearbeitungsmittel lediglich ein Anpressbügel zum Zusammenpressen von vorbereiteten Klebestellen, oder ein Messerbalken zum Abtrennen von Einheiten eines Förderstromes, oder weist Mittel zum Hochfrequenzschweissen oder Ultraschallschweissen auf.

Bei der Verschweissung von thermoplastischen Kunststoffolien als Verpackungsmaterial sind Stückzahlen von beispielsweise bis zu 40'000 pro Stunde erzielbar.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: einen seitlichen Schnitt durch eine Vorrichtung gemäss der Erfindung;
- Figur 2: einen Querschnitt durch dieselbe Vorrichtung;
- Figuren 3 bis 6: verschiedene Stadien vor und nach einer Bearbeitungsoperation;
- Figur 7: einen Aufbau eines Trägerbandes;
- Figur 8: eine Deformation eines Trägerbandes im Betrieb der Vorrichtung; und
- Figur 9: eine Wirkungsweise einer weiteren Ausführungsform der Erfindung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

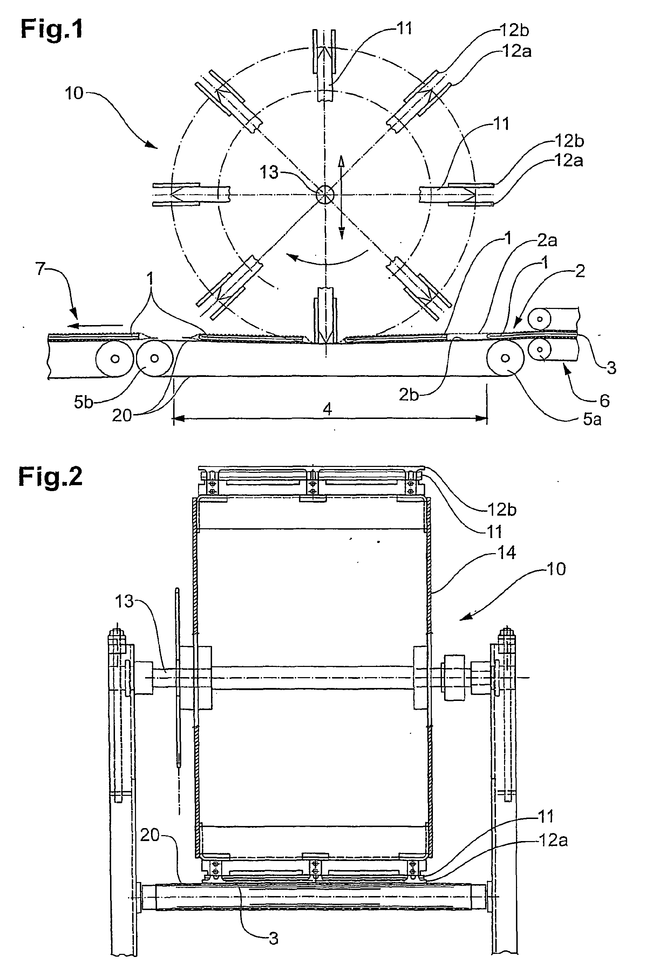

**Figur 1** zeigt einen seitlichen Schnitt durch eine Vorrichtung gemäss der Erfindung: Eine Reihe von nacheinander folgend geförderten Objekten 1 ist zumindest teilweise von Verpackungsmaterial umgeben und bildet damit einen Förderstrom 3. Die Reihe wird durch einen oberen Bereich des Verpackungsmittels 2a bedeckt und liegt auf einem unteren Bereich des Verpackungsmittels 2b. Der Förderstrom 3 wird durch eine Zuführung 6 zugeführt, durch ein Trägerband 20 an einem Schweissrotor 10 zur Bearbeitung vorbei geführt und durch ein Auslaufband 7 weggeführt. Das Trägerband 20 ist durch eine erste Rolle 5a und eine zweite Rolle 5b tangential zum Schweissrotor 10 geführt. Das Trägerband 20 weist im Bereich der Bearbeitung durch den Schweissrotor 10 einen nicht unterstützten Bereich 4 auf.

Nicht eingezeichnet sind beispielsweise entlang des Förderstroms 3 vorher angeordnete Mittel zur Vereinzelung der Objekte 1, zur Umhüllung der Objekte 1 durch das Verpackungsmittel 2, zum Erzeugen einer oder mehrerer Längsnähte zwischen dem oberen und dem unteren Bereich des Verpackungsmittels 2a, 2b, etc. Eine Anordnung zur Vereinzelung der Objekte 1 ist im Detail beschrieben in einer Patentanmeldung desselben Anmelders, die dasselbe Anmeldedatum hat wie die vorliegende Anmeldung, und die sich aufgrund ihrer hohen erzielbaren Taktrate besonders zur Kombination mit der vorliegenden Erfindung eignet.

Der Schweissrotor 10 ist um eine Drehachse 13 drehbar angeordnet und weist als Bearbeitungsmittel mehrere Schweissbalken 11 auf, die in gleichmässigen Abständen an der Peripherie des Schweissrotors 10 in radialer Richtung hervorragen. Die Schweissbalken 11 sind beispielsweise an einer Aufhängung 14 fix befestigt, oder zur Variation des Abstandes untereinander an einer Verstelleinrichtung gemäss der eingangs erwähnten WO 2004 018 297 angebracht. An jedem der Schweissbalken 11 ist jeweils ein vorlaufender Niederhalter 12a und ein nachlaufender Niederhalter 12b federnd angeordnet.

**Figur 2** zeigt einen Querschnitt durch dieselbe Vorrichtung. Es ist am oberen Rand der Trommel ein nachlaufender Niederhalter 12b sichtbar, der in radialer Richtung über den zugeordneten Schweissbalken 11 hinausragt. Am unteren Rand ist ein vorlaufender Niederhalter 12a im eingefederten Zustand sichtbar.

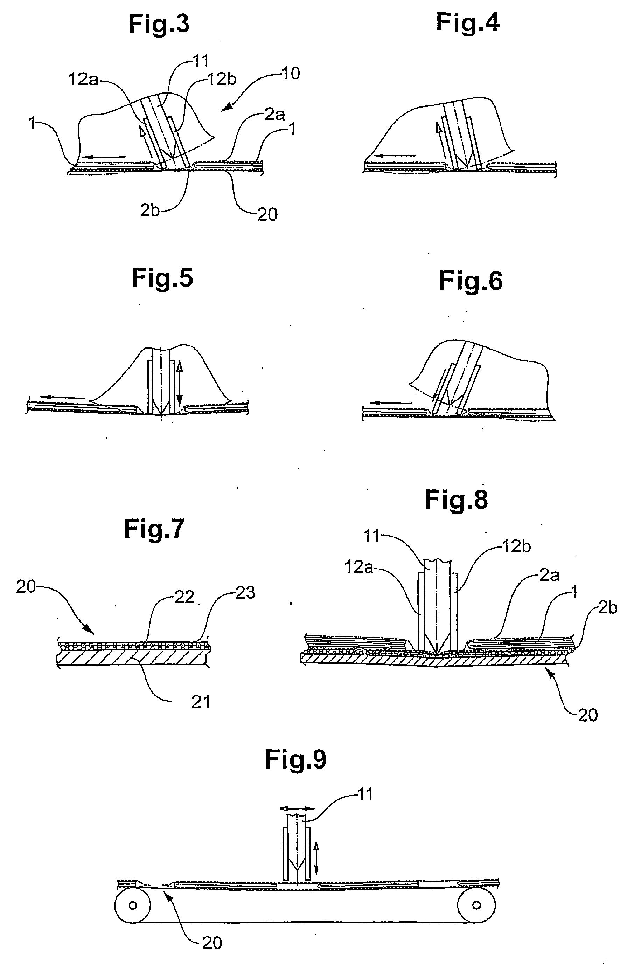

**Figuren 3** bis **6** zeigen verschiedene Stadien des erfindungsgemässen Verfahrens vor und nach einer Bearbeitungsoperation. Als Bearbeitung ist zum Zwecke der Erklärung eine Verschweissung mit einem beheizten Schweissbalken 11 gewählt worden. Die Prinzipien gelten aber analog für andere Bearbeitungsarten. Gemäss der Bewegungsrichtung sowohl des Förderstromes 3 als auch des Schweissbalkens 11 von rechts nach links gerät zuerst der vorlaufende Niederhalter 12a in Kontakt mit dem oberen Bereich des Verpackungsmittels 2a. Im Stadium gemäss **Figur 3** hat der vorlaufende Niederhalter 12a den oberen Bereich des Verpackungsmittels 2a bereits gegen den unteren Bereich des Verpackungsmittels 2b gedrückt und beginnt in Pfeilrichtung einzufedern, also in radialer Richtung bezüglich des Schweissrotors 10. Der nachlaufende Niederhalter 12b ist bereits in Kontakt mit dem oberen Bereich des Verpackungsmittels 2a.

Im Stadium gemäss **Figur 4** hat auch der nachlaufende Niederhalter 12b den oberen Bereich des Verpackungsmittels 2a nach unten gedrückt. Die Niederhalter fixieren und stabilisieren das Verpackungsmittel 2a, 2b, z.B. eine Kunststoffolie. Im Stadium gemäss **Figur 5** sind beide Niederhalter 12a, 12b im wesentlichen in senkrechter Richtung zum Förderstrom eingefedert und ist der Schweissbalken 11 in Kontakt mit dem Förderstrom 3 getreten. Der Schweissbalken 11 übt in dieser Position einen maximalen Druck gegen den Förderstrom 3 aus, und es findet die Bearbeitung durch beispielsweise Verschweissen, Andrücken oder Trennen statt. Beim Andrücken ist zu unterscheiden zwischen einem leichten Andrücken durch die Niederhalter 12a, 12b, welches das Verpackungsmittel 2a, 2b in eine definierte Lage bringt und stabilisiert, und einem festeren Andrücken durch einen Anpressbügel, welches die Verbindung herstellt. Nach Massgabe einer Nachgiebigkeit des Schweissbalkens 11 und/oder des Trägerbandes 20 in Richtung der Bearbeitungskräfte, also senkrecht zur Ebene des Trägerbandes 20, findet die Bearbeitung auch in einem Bereich vor und nach der erwähnten Position maximalen Drucks statt. Die Nachgiebigkeiten verlängern also einen Bearbeitungsbereich.

Eine Schweisszeit liegt, je nach Temperatur und Andruckkraft, beispielsweise im Bereich von 0.05 Sekunden, bei einer Leistung von 30'000 Einheiten pro Stunde und einer Fördergeschwindigkeit von 2 m/s. Entsprechend weist der Bearbeitungsbereich eine Länge von ca. 2 cm auf.

Das Trägerband 20 verläuft also, bis auf die erwähnte Nachgiebigkeit, die sich aus der Länge des nicht unterstützter Bereichs des Trägerbandes 4, einer Bandspannung und einer Nachgiebigkeit des Bandes in Laufrichtung ergibt, im wesentlichen geradlinig und tangential zur Umlaufbahn der äussersten und dadurch bei der Schweissung wirksamen Kanten der Schweissbalken 11. Dies ist der Fall, sofern kein Teil des Schweissbalkens 11 oder der Niederhalter 12a, 12b in Kontakt mit dem Förderstrom 3 ist. Durch die Kontaktkräfte mit jenen, insbesondere mit dem Schweissbalken 11, wird das Trägerband 20 um wenige Millimeter in radialer Richtung des Schweissrotors 10 weggedrückt, jedoch um weniger als 2 bis 3 Zentimeter.

Im Stadium gemäss **Figur 6** hat sich der Schweissbalken 11 bereits vom Förderstrom 3 entfernt und der vorlaufende Niederhalter 12a beginnt sich zu entfernen. Da sich der Schweissbalken 11 zuerst entfernt, wird ein Hängenbleiben von Teilen des Förderstromes 3 am Schweissbalken 11 wirksam verhindert. Der nachlaufende Niederhalter 12b ist noch in Kontakt mit dem Förderstrom 3 und unterstützt dadurch dessen Beförderung. Nach dem Verschweissen sind, falls vorgängig mindestens eine Längsnaht zur Bildung eines Verpackungsschlauches angebracht wurde die flachen Objekte 1 allseitig vom Verpackungsmaterial umschlossen.

**Figur 7** zeigt einen Aufbau eines Trägerbandes. Auf einem Basismaterial 21, welches die wesentlichen Zugkräfte aufnimmt, ist eine Dämpfungsschicht 22, beispielsweise aus Filz oder einem Kunststoff-Schaumstoff, und darüber eine äussere hitzebeständige Schicht 23 angeordnet. Die hitzebeständige Schicht 23 weist vorzugsweise Teflon auf, wodurch einem Anhaften des Förderstromes am Band entgegengewirkt wird.

**Figur 8** zeigt eine Deformation eines Trägerbandes im Betrieb der Vorrichtung. Es ist dasselbe Stadium wie in der Figur 5 vergrössert gezeigt. Aufgrund der nachgiebigen Befestigung der Niederhalter 12a, 12b am Schweissbalken 11 dringen die Niederhalter 12a, 12b - mit dazwischenliegendem Verpackungsmittel 2a, 2b - weniger stark in die Dämpfungsschicht 22 ein als der Schweissbalken 11. Die zum Einfedern der Niederhalter 12a, 12b notwendige Kraft ist auf die Nachgiebigkeit der Dämpfungsschicht 22 abgestimmt, so dass einerseits eine ausreichende Kraft zum Festhalten der Verpackungsmittel 2a, 2b durch die Niederhalter 12 verbleibt, und andererseits die Dämpfungsschicht 22 durch die Niederhalter 12a, 12b nicht so stark wie durch den Schweissbalken 11 eingedrückt wird. Damit wird eine Kontaktfläche zwischen dem Schweissbalken 11 und dem Verpackungsmittel 2 vergrössert, und auch eine Zeitdauer, währenddem dieser Kontakt auftritt, vergrössert.

**Figur 9** zeigt eine Wirkungsweise einer weiteren Ausführungsform der Erfindung: Dabei sind die Niederhalter 12a, 12b an einem Schweissbalken 11 angebracht, welcher intermittierend zuerst in Förderrichtung entlang des Förderstromes 3 und im Kontakt mit dieser gemäss Figur 8 bewegt wird, und anschliessend in vertikaler Richtung vom Förderstrom 3 weg und dann in Gegenrichtung entlang des Förderstromes 3 zurück bewegt wird. Durch die intermittierende Bewegung ist zwar die Taktrate begrenzt, jedoch bleiben die Vorteile aus dem Einsatz der Niederhalter 12a, 12b und des Trägerbandes 20 für sich alleine oder in Kombination bestehen.

Beim Einsatz von Schweissbalken 11 werden diese, je nach Dicke der zu verschweissenden Folien auf 300° bis 500° Celsius aufgeheizt. Eine dazu notwendige elektrische Leistung von ca. 500W je Schweissbalken 11 wird beispielsweise über Schleifringe auf die Trommel respektive ein Bewegungsmittel für eine nicht kreisrunde Schweissbalkenbewegung übertragen.

In einer Variante der Anordnung gemäss Figur 1 liegt der Übergang zwischen dem Trägerband 20 und dem Auslaufband 7 weiter rechts, also stromaufwärts, so dass ein abgetrenntes, verpacktes Objekt 1 unmittelbar nach der Bearbeitung durch einen trennenden Schweissbalken 11 zumindest teilweise auf dem Auslaufband 7 liegt. Das Auslaufband 7 weist eine leicht höhere Geschwindigkeit als das Trägerband 20 auf, so dass der Förderstrom 3 durch Verlängern des Abstandes an den Trennstellen zwischen den verpackten Objekten 1 auseinandergezogen wird.

Gemäss einer weiteren bevorzugten Ausführungsform der Erfindung kann das Trägerband 20 auch durch mehrere in Querrichtung getrennte, parallel nebeneinander verlaufende Einzelbänder realisiert sein. Dadurch ist es möglich, eine Bearbeitung nur im Bereich jeweils der Einzelbänder durchzuführen, währenddem in einem Zwischenraum zwischen den Einzelbändern keine Bearbeitung stattfindet.

In noch einer weiteren bevorzugten Ausführungsform der Erfindung werden die Schweissbalken 11, oder allgemein die Bearbeitungsmittel, zusammen mit den Niederhaltern 12a, 12b im Bearbeitungsbereich durch eine entsprechende Vorrichtung zusätzlich in Richtung des Trägerbandes 20 bewegt. Diese Vorrichtung kann rein mechanisch durch die Bewegung des Schweissrotors 10, oder mit anderen Mitteln, beispielsweise elektromechanisch oder pneumatisch, angesteuert und bewegt werden.

### BEZUGSZEICHENLISTE

- 1: flaches, gefördertes Objekt
- 2: Verpackungsmittel
- 2a: oberer Bereich des Verpackungsmittels
- 2b: unterer Bereich des Verpackungsmittels
- 3: Förderstrom
- 4: nicht unterstützter Bereich des Trägerbandes
- 5a, 5b: Rollen zur Führung des Trägerbandes
- 5a: erste Rolle zur Führung des Trägerbandes
- 5b: zweite Rolle zur Führung des Trägerbandes
- 6: Zuführung
- 7: Auslaufband
- 10: Schweissrotor
- 11: Schweissbalken
- 12: Niederhalter
- 12a: vorlaufender Niederhalter
- 12b: nachlaufender Niederhalter
- 13: Drehachse
- 14: Aufhängung, Trommel
- 20: Trägerband
- 21: Basismaterial
- 22: Dämpfungsschicht
- 23: hitzebeständige Schicht

## Patentansprüche

1. Verfahren zum Verpacken von flachen Objekten wobei die flachen Objekte (1) in einem Förderstrom (3) hintereinander und voneinander beabstandet in einer Verpackungsmittel-Bahn (2a, 2b) in einer Bahnrichtung gefördert werden, wobei die Verpackungsmittel-Bahn (2a, 2b) die flachen Objekte (1) beidseitig bedeckt und am Förderstrom (3) mindestens je zwischen zwei aufeinanderfolgenden Objekten (1) mittels eines Bearbeitungsmittels (11) Querverbindungen zwischen einem oberen Bereich (2a) und einem unteren Bereich (2b) des Verpackungsmittels erstellt werden, wobei das Bearbeitungsmittel (11) und der Förderstrom (3) mit im wesentlichen derselben Geschwindigkeit in dieselbe Richtung bewegt werden,
**dadurch gekennzeichnet, dass** bei einer Bewegung des Bearbeitungsmittels (11) an den Förderstrom (3) heran ein federnd am Bearbeitungsmittel (11) befestigtes erstes Niederhaltemittel (12a) den oberen Bereich des Verpackungsmittels (2a) gegen den unteren Bereich des Verpackungsmittels (2b) drückt und bewegt, und anschliessend das Bearbeitungsmittel (11) den oberen Bereich des Verpackungsmittels (2a) gegen den unteren Bereich des Verpackungsmittels (2b) drückt und dabei eine Bearbeitungsoperation ausführt.

2. Verfahren gemäss Anspruch 1, **dadurch gekennzeichnet, dass** sowohl das erste Niederhaltemittel (12a) wie auch ein zweites Niederhaltemittel (12b), welche in Bewegungsrichtung jeweils vor beziehungsweise nach dem Bearbeitungsmittel (11) angeordnet sind und federnd mit dem Bearbeitungsmittel (11) verbunden sind, den oberen Bereich des Verpackungsmittels (2a) gegen den unteren Bereich des Verpackungsmittels (2b) drücken, bevor und währenddem das Bearbeitungsmittel (11) die Bearbeitungsoperation ausführt.

3. Verfahren gemäss Anspruch 1 oder 2, **dadurch gekennzeichnet, dass** durch das Drücken des Bearbeitungsmittels (11) gegen den oberen und unteren Bereich des Verpackungsmittels (2) das Verpackungsmittel (2) gegen ein Trägerband (20) gedrückt wird, welches den Förderstrom (3) im Bereich der Bearbeitung trägt und fördert.

4. Verfahren gemäss Anspruch 3, **dadurch gekennzeichnet, dass** das Trägerband (20) durch eine vom Bearbeitungsmittel (11) ausgeübte Kraft ausgelenkt wird.

5. Verfahren gemäss Anspruch 3 oder 4, **dadurch gekennzeichnet, dass** eine Dämpfungsschicht (22) des Trägerbandes (20) durch eine vom Bearbeitungsmittel (11) ausgeübte Kraft komprimiert wird.

6. Verfahren gemäss einem der bisherigen Ansprüche, **dadurch gekennzeichnet, dass** durch das Drücken des Bearbeitungsmittels (11) gegen den oberen und unteren Bereich des Verpackungsmittels (2) das Bearbeitungsmittel (11) bezüglich seiner Aufhängung (14) einfedert.

7. Verfahren gemäss einem der bisherigen Ansprüche, **dadurch gekennzeichnet, dass** mehrere Bearbeitungsmittel (11) jeweils in einer gleichförmigen Bewegung an einer Ausgangsstellung vorbei mit im wesentlichen der Geschwindigkeit des Förderstroms (3) an den Förderstrom (3) herangeführt werden, die Bearbeitungsoperation ausgeführt wird und anschliessend die Bearbeitungsmittel (11) auf einer Rückführstrecke wieder an der Ausgangsstellung vorbei zurückgeführt werden.

8. Verfahren gemäss Anspruch 7, **dadurch gekennzeichnet, dass** zu jedem Zeitpunkt maximal ein Bearbeitungsmittel (11) zur Ausführung einer Bearbeitungsoperation im Kontakt mit dem Förderstrom (3) ist.

9. Verfahren gemäss Anspruch 8, **dadurch gekennzeichnet, dass** die Bearbeitungsmittel (11) an einer Trommel (14) montiert sind und in einer Kreisbahn bewegt werden, und eine Förderrichtung des Förderstromes (3) im wesentlichen tangential zu dieser Kreisbahn verläuft.

10. Verfahren gemäss einem der bisherigen Ansprüche, **dadurch gekennzeichnet, dass** die Bearbeitungsoperation mindestes eine der Operationen Wärmeschweissen, Ultraschallschweissen, Anpressen vorgeleimter Stellen und Trennen umfasst.

11. Vorrichtung zum Verpacken von flachen Objekten, aufweisend
- ein Fördermittel zur Förderung der flachen Objekte (1) in einem Förderstrom (3) hintereinander und voneinander beabstandet in einer Verpackungsmittel-Bahn (2a, 2b) in einer Bahnrichtung, wobei die Verpackungsmittel-Bahn (2a, 2b) die flachen Objekte (1) beidseitig bedeckt, und
- ein Bearbeitungsmittel (11) zur Erstellung von Querverbindungen zwischen einem oberen Bereich (2a) und einem unteren Bereich (2b) des Verpackungsmittels am Förderstrom (3) mindestens je zwischen zwei aufeinanderfolgenden Objekten (1), sowie
- ein Bewegungsmittel (14) zur Bewegung des Bearbeitungsmittels (11) in einem Bearbeitungsbereich mit im wesentlichen derselben Geschwindigkeit in dieselbe Richtung wie der Förderstrom (3),
**dadurch gekennzeichnet, dass** am Bearbeitungsmittel (11) ein federnd befestigtes erstes Niederhaltemittel (12a) angeordnet ist,
welches zum Niederhalten des Verpackungsmittels (2) durch Ausüben einer Kraft auf einen oberen Bereich des Verpackungsmittels (2a) und dadurch auf einen unteren Bereich des Verpackungsmittels (2b),
bevor das Bearbeitungsmittel (11) zur Ausführung einer Bearbeitungsoperation unter Ausübung einer Kraft auf einen oberen Bereich des Verpackungsmittels (2a) und dadurch auf einen unteren Bereich des Verpackungsmittels (2b) drückt, ausgebildet ist.

12. Vorrichtung gemäss Anspruch 11, **dadurch gekennzeichnet, dass** das Bearbeitungsmittel (11) zwischen dem ersten Niederhaltemittel (12a) und einem zweiten, ebenfalls federnd am Bearbeitungsmittel (11) befestigten Niederhaltemittel (12b) angeordnet ist, welche Niederhaltemittel (12a, 12b) beide zum Niederhalten des Verpackungsmittel (2) vor und während der Bearbeitung durch das Bearbeitungsmittel (11) ausgebildet sind.

13. Vorrichtung gemäss Anspruch 11 oder 12, aufweisend ein Trägerband (20) zur Förderung des Förderstromes (3) im Bearbeitungsbereich und zur Erzeugung einer Gegenkraft zu den von den Niederhaltemitteln (12a, 12b) und dem Bearbeitungsmittel (11) auf den Förderstrom (3) ausgeübten Kräften.

14. Vorrichtung gemäss Anspruch 13, **dadurch gekennzeichnet, dass** das Trägerband (20) eine nachgiebige Dämpfungsschicht (22) aufweist.

15. Vorrichtung gemäss Anspruch 13 oder 14, **dadurch gekennzeichnet, dass** das Trägerband (20) auf einer Aussenseite eine hitzebeständige Schicht (23) aufweist.

16. Vorrichtung gemäss einem der Ansprüche 11 bis 15, **dadurch gekennzeichnet, dass** das Bearbeitungsmittel (11) durch eine Verbindung am Bewegungsmittel (14) befestigt ist, welche Verbindung in einer im Wesentlichen senkrecht zur Bewegungsrichtung des Bearbeitungsmittels (11) verlaufenden Richtung nachgiebig ist.

17. Vorrichtung gemäss einem der Ansprüche 11 bis 16, **dadurch gekennzeichnet, dass** das Bewegungsmittel (14) zur gleichförmigen Bewegung einer Mehrzahl von Bearbeitungsmitteln (11) entlang einer Umlaufbahn ausgebildet ist, welche Umlaufbahn die Bearbeitungsmittel (11) im Bearbeitungsbereich in Kontakt mit dem Förderstrom (3) bringt.

18. Vorrichtung gemäss Anspruch 17, **dadurch gekennzeichnet, dass** die Bearbeitungsmittel (11) an einer Trommel (14) montiert sind und in einer Kreisbahn bewegbar sind, und eine Förderrichtung des Förderstromes (3) im wesentlichen tangential zu dieser Kreisbahn verläuft.

19. Vorrichtung gemäss einem der Ansprüche 11 bis 17, **dadurch gekennzeichnet, dass** das Bearbeitungsmittel eines von einem Schweissbalken, einem Anpressbügel oder einem Ultraschallschweissgerät ist.

## Claims

1. A method for packaging flat objects, wherein the flat objects (1), wherein the flat objects (1) are conveyed in a conveyor flow (3) one after the other and distanced to one another in a packaging means web (2a, 2b) in a web direction, wherein the packaging means web (2a, 2b) covers the flat objects (2) on both sides, and transverse connections between an upper region (2a) and a lower region (2b) of the packaging means are created on the conveyor flow (3) at least in each case between two successive objects (1) by way of a processing means (11), wherein the processing means (11) and the conveyor flow (3) are moved essentially at the same speed in the same direction,
**characterised in that** with a movement of the processing means (11) to the conveyor flow (3), a first hold-down means (12a) resiliently fastened on the processing means (11) presses and moves the upper region of the packaging means (2a) against the lower region of the packaging means (2b), and subsequently the processing means (11) presses the upper region of the packaging means (2a) against the lower region of the packaging means (2b) and thereby carries out a processing operation.

2. A method according to claim 1, **characterised in that** the first hold-down means (12a) as well as a second hold-down means (12b) which in the movement direction in each case are arranged in front of and behind the processing means (11) respectively, and are resiliently connected to the processing means (11), press the upper region of the packaging means (2a) against the lower region of the packaging means (2b) before and whilst the processing means (11) carries out the processing operation.

3. A method according to claim 1 or 2, **characterised in that** by way of the pressing of the processing means (11) against the upper and lower region of the packaging means (2), the packaging means (2) is pressed against a support belt (20) which carries and conveys the conveyor flow (3) in the region of the processing.

4. A method according to claim 3, **characterised in that** the support belt (20) is deflected by a force exerted by the processing means (11).

5. A method according to claim 3 or 4, **characterised in that** a damping layer (22) of the support belt (20) is compressed by a force exerted by the processing means (11).

6. A method according to one of the preceding claims, **characterised in that** the processing means springs in with regard to its mounting (14) by way of the pressing of the processing means (11) against the upper and the lower region of the packaging means (2).

7. A method according to one of the preceding claims, **characterised in that** several processing means (11) in each case in a uniform movement are led past an initial position to the conveyor flow (3) at essentially the speed of the conveyor flow (3), the processing operation is carried out, and subsequently the processing means (11) on a return path is led back again past the initial position.

8. A method according to claim 7, **characterised in that** at every point in time, maximally one processing means (11) is in contact with the conveyor flow (3) for carrying out a processing operation.

9. A method according to claim 8, **characterised in that** the processing means (11) are assembled on a drum (14) and are moved in a circular path, and a conveyor direction of the conveyor flow (3) runs essentially tangentially to this circular path.

10. A method according to one of the preceding claims, **characterised in that** the processing operation comprises at least one of the operations of thermal welding, ultrasonic welding, pressing pre-glued locations, and separation.

11. A device for packaging flat objects, comprising
- a conveyor means for conveying flat objects (1) in a conveyor flow (3) one after the other and distanced to one another, in a packaging means web (2a, 2b) in a web direction, wherein the packaging means web (2a, 2b) covers the flat objects (1) on both sides, and
- a processing means (11) for the creation of transverse connections between an upper region (2a) and a lower region (2b) of the packaging means on the conveyor flow (3) at least in each case between two successive objects (1), as well as
- a movement means (14) for moving the processing means (11) in a processing region at essentially the same speed and in the same direction as the conveyor flow (3),
**characterised in that** a resiliently fastened, first hold-down means (12a) is arranged on the processing means (11),
which is designed for holding down the packaging means (2) by way of exerting a force onto an upper region of the packaging means (2a) and by way of this onto a lower region of the packaging means (2b),
before the processing means (11), for carrying out a processing operation, whilst exerting a force, presses onto an upper region of the packaging means (2a) and by way of this onto a lower region of the packaging means (2b).

12. A device according to claim 11, **characterised in that** the processing means (11) is arranged between the first hold-down means (12a) and a second hold-down means (12b) which is likewise fastened resiliently on the processing means (11), said hold-down means (12a, 12b) both being designed for holding down the packaging means (2) before and during the processing by the processing means (11).

13. A device according to claim 11 or 12, comprising a support belt (20) for conveying the conveyor flow (3) in the processing region and for producing a force counter to the forces exerted by the hold-down means (12a, 12b) and the processing means (11) onto the conveyor flow (3).

14. A device according to claim 13, **characterised in that** the support belt (20) comprises a compliant damping layer (22).

15. A device according to claim 13 or 14, **characterised in that** the support belt (20) on an outer side has a heat-resistant layer (23).

16. A device according to one of the claims 11 to 15, **characterised in that** the processing means (11) is fastened on the movement means (14) by way of a connection, said connection being compliant in a direction running essentially perpendicularly to the movement direction of the processing means (11).

17. A device according to one of the claims 11 to 16, **characterised in that** the movement means (14) is designed for the uniform movement of a plurality of processing means (11) along a revolving path, said revolving path bringing the processing means (11) into contact with the conveyor flow (3) in the processing region.

18. A device according to claim 17, **characterised in that** the processing means (11) are assembled on a drum and are movable in a circular path, and a conveyor device of the conveyor flow (3) runs essentially tangentially to this circular path.

19. A device according to one of the claims 11 to 17, **characterised in that** the processing means is one of a welding beam, a pressing bow or an ultrasonic welding apparatus.

## Revendications

1. Procédé d'emballage d'objets plats, les objets plats (1) étant transportés dans un flux de transport (3) les uns derrière les autres et à distance les uns des autres dans une voie de produit d'emballage (2a, 2b) dans une direction de la voie, la voie de produit d'emballage (2a, 2b) couvrant des deux côtés les objets plats (1), et des assemblages transversaux entre une partie supérieure (2a) et une partie inférieure (2b) du produit d'emballage étant réalisés par l'intermédiaire d'une moyen de traitement (11) dans le flux de transport (3) au moins entre respectivement deux objets (1) successifs, le moyen de traitement (11) et le flux de transport (3) étant déplacés sensiblement à la même vitesse dans la même direction,
**caractérisé en ce que** lors d'un déplacement du moyen de traitement (11) vers le flux de transport (3), un premier moyen de retenue (12a), fixé de manière flexible sur le moyen de traitement (11), pousse et déplace la partie supérieure du produit d'emballage (2a) contre la partie inférieure du produit d'emballage (2b), et ensuite le moyen de traitement (11) presse la partie supérieure du produit d'emballage (2a) contre la partie inférieure du produit d'emballage (2b) et effectue dans ce cas une opération de traitement.

2. Procédé selon la revendication 1, **caractérisé en ce que** tant le premier moyen de retenue (12a) qu'un deuxième moyen de retenue (12b), qui sont disposés dans la direction de déplacement respectivement en amont et en aval du moyen de traitement (11) et qui sont assemblés de manière flexible au moyen de traitement (11), poussent la partie supérieure du produit d'emballage (2a) contre la partie inférieure du produit d'emballage (2b) avant et pendant que le moyen de traitement (11) effectue l'opération de traitement.

3. Procédé selon la revendication 1 ou 2, **caractérisé en ce que**, sous l'effet de la pression du moyen de traitement (11) contre la partie supérieure et la partie inférieure du produit d'emballage (2), le produit d'emballage (2) est poussé contre une bande support (20), qui porte le flux de transport (3) dans la zone de traitement et le transporte.

4. Procédé selon la revendication 3, **caractérisé en ce que** la bande support (20) est déviée par l'intermédiaire d'une force exercée par le moyen de traitement (11).

5. Procédé selon la revendication 3 ou 4, **caractérisé en ce qu'**une couche d'amortissement (22) de la bande support (20) est comprimée par une force exercée par le moyen de traitement (11).

6. Procédé selon l'une quelconque des revendications précédentes, **caractérisé en ce que**, sous l'effet de la pression du moyen de traitement (11) contre la partie supérieure et la partie inférieure du produit d'emballage (2), le moyen de traitement (11) est comprimé par rapport à sa suspension (14).

7. Procédé selon l'une quelconque des revendications précédentes, **caractérisé en ce que** plusieurs moyens de traitement (11) sont acheminés vers le flux de transport (3) chacun dans un mouvement uniforme le long d'une position de sortie avec sensiblement la vitesse du flux de transport (3), l'opération de traitement est effectuée et, ensuite, les moyens de traitement (11) sont ramenés sur une voie de retour à nouveau le long de la position de sortie.

8. Procédé selon la revendication 7, **caractérisé en ce qu'**à chaque moment au maximum un moyen de traitement (11) destiné à effectuer une opération de traitement est en contact avec le flux de transport (3).

9. Procédé selon la revendication 8, **caractérisé en ce que** les moyens de traitement (11) sont montés sur un tambour (14) et sont déplacés sur une trajectoire circulaire, et une direction de transport du flux de transport (3) est sensiblement tangentielle à cette trajectoire circulaire.

10. Procédé selon l'une quelconque des revendications précédentes, **caractérisé en ce que** l'opération de traitement comporte au moins une des opérations : soudage à froid, soudage aux ultrasons, application de zones pré-encollées l'une contre l'autre et séparation.

11. Dispositif d'emballages d'objets plats, comportant :
- un moyen de transport destiné à transporter les objets plats (1) dans un flux de transport (3) les uns derrière les autres et à distance les uns des autres dans une voie de produit d'emballage (2a, 2b) dans une direction de la voie, la voie de produit d'emballage (2a, 2b) couvrant des deux côtés les objets plats (1), et
- un moyen de traitement (11) destiné à réaliser des assemblages transversaux entre une partie supérieure (2a) et une partie inférieure (2b) du produit d'emballage dans le flux de transport (3) respectivement entre au moins deux objets (1) successifs, et
- un moyen de déplacement (14) destiné à déplacer le moyen de traitement (11) dans une zone de traitement avec sensiblement la même vitesse dans la même direction que le flux de transport (3),
**caractérisé en ce qu'**un premier moyen de retenue (12a) est fixé de manière flexible sur le moyen de traitement (11),
lequel est conçu pour retenir le produit d'emballage (2) en exerçant une force sur la partie supérieure du produit d'emballage (2a) et, de ce fait, sur une partie inférieure du produit d'emballage (2b),
avant que le moyen de traitement (11), pour effectuer une opération de traitement, pousse moyennant l'application d'une force, sur la partie supérieure du produit d'emballage (2a) et, de ce fait, sur une partie inférieure du produit d'emballage (2b).

12. Dispositif selon la revendication 11, **caractérisé en ce que** le moyen de traitement (11) est disposé entre le premier moyen de retenue (12a) et un deuxième moyen de retenue (12b) également fixé de manière flexible sur le moyen de traitement (11), lesquels moyens de retenue (12a, 12b) sont réalisés tous deux pour pousser vers le bas le produit d'emballage (2) avant et pendant le traitement par le moyen de traitement (11).

13. Dispositif selon la revendication 11 ou 12, comportant une bande support (20) destinée à transporter le flux de transport (3) dans la zone de traitement et à générer une force antagoniste par rapport aux forces exercées sur le flux de transport (3) par les moyens de retenue (12a, 12b) et le moyen de traitement (11).

14. Dispositif selon la revendication 13, **caractérisé en ce que** la bande support (20) comporte une couche d'amortissement (22) flexible.

15. Dispositif selon la revendication 13 ou 14, **caractérisé en ce que** la bande support (20) comporte, sur une face extérieure, une couche (23) résistante à la chaleur.

16. Dispositif selon l'une quelconque des revendications 11 à 15, **caractérisé en ce que** le moyen de traitement (11) est fixé par un assemblage au moyen de déplacement (14), lequel assemblage est flexible dans une direction sensiblement perpendiculaire à la direction de déplacement du moyen de traitement (11).

17. Dispositif selon l'une quelconque des revendications 11 à 16, **caractérisé en ce que** le moyen de déplacement (14) est réalisé pour déplacer de manière uniforme une pluralité de moyens de traitement (11) le long d'une voie périphérique, par laquelle les moyens de traitement (11) sont amenés en contact avec le flux de transport (3) dans la zone de traitement.

18. Dispositif selon la revendication 17, **caractérisé en ce que** les moyens de traitement (11) sont montés sur un tambour (14) et sont aptes à se déplacer dans une trajectoire circulaire, et un dispositif de transport du flux de transport (3) est sensiblement tangent à cette trajectoire circulaire.

19. Dispositif selon l'une quelconque des revendications 11 à 17, **caractérisé en ce que** le moyen de traitement est un parmi : une mâchoire de soudage, un étrier de pression ou un dispositif de soudage aux ultrasons.
